# EUROPÄISCHE PATENTSCHRIFT

(11) **EP 0 983 590 B1**
(45) Veröffentlichungstag und Bekanntmachung des Hinweises auf die Patenterteilung: **04.10.2001**
(21) Anmeldenummer: 98930690.7
(22) Anmeldetag: 14.05.1998
(51) Int. Cl.: G11B 7/26, F26B 15/04, F26B 3/28

(54) **VORRICHTUNG ZUM TROCKNEN VON SUBSTRATEN**
DEVICE FOR DRYING SUBSTRATES
DISPOSITIF POUR SECHER DES SUBSTRATS

(30) Priorität: 23.05.1997 DE 19721689
(43) Veröffentlichungstag der Anmeldung: 08.03.2000
(73) Patentinhaber: Steag HamaTech AG, 75447 Sternenfels (DE)
(72) Erfinder: WEBER, Klaus, D-75015 Bretten (DE); SPEER, Ulrich, D-75239 Eisingen (DE)
(74) Vertreter: Wagner, Karl H., Dipl.-Ing.
(86) Internationale Anmeldenummer: EP9802851
(87) Internationale Veröffentlichungsnummer: WO9853452

(56) Entgegenhaltungen:
- EP-A- 0 762 409
- DE-A- 4 041 199
- FR-A- 2 606 198
- PATENT ABSTRACTS OF JAPAN vol. 007, no. 124 (M-218), 28. Mai 1983 & JP 58 042435 A (MATSUSHITA DENKI SANGYO KK), 11. März 1983

## Beschreibung

Die Erfindung betrifft eine Vorrichtung zum Trocknen von Substratscheiben durch Bestrahlen mit ultraviolettem Licht, wobei während des Bestrahlungsvorgangs eine Glasplatte auf der Substratscheibe aufliegt.

Derartige Trocknungsvorrichtungen werden insbesondere bei der Fertigung von Kompakt-Scheiben (Compact Discs oder CD's), Mini-Scheiben (Mini Discs), Magneto-optischen Scheiben (Magneto-optical Discs), CD-Rom's, CD-R's, Photo- oder Video-Scheiben (Photo-CDs und/oder Video Discs) und/oder digitalen Video Discs (DVD's) eingesetzt. Inbesondere bei der Fertigung von Substratscheiben, die aus zwei miteinander verklebten Teil-Substraten bestehen, werden während des Trocknungsvorgangs Glasplatten auf die Substratscheiben aufgelegt, um zu verhindern, daß sich das Substrat während des Trocknungsvorgangs wellt oder seine ebene Form verliert. Unter Trocknung ist dabei auch das Aushärten von Klebemitteln zu verstehen, mit denen beispielsweise zwei Substrate miteinander zu einer Substratscheibe verklebt werden. Die zu trocknenden Substratscheiben befinden sich üblicherweise auf einem Rundschalttisch, der sich getaktet dreht und die Substratscheiben in einem Trocknungsbereich der Trocknungsvorrichtung bringen. Bevor die Substratscheiben in den Trocknungsbereich gelangen, werden die Glasplatten mit einem Glasplatten-Handler auf die Substratscheiben aufgelegt und nach dem Trocknungsvorgang wieder entfernt, nachdem die Substratscheiben aus der Trocknungsvorrichtung gedreht wurden. Durch das Auflegen der Glasplatten auf die Substratscheiben mittels eines Glasplatten-Handlers ist es nicht zu vermeiden, daß auf die Substratscheiben ein ungleichmäßiger Druck ausgeübt wird. Dadurch verändert sich die zwischen den zu verklebenden Substraten befindliche Schicht aus Klebemittel, die im noch nicht getrockneten bzw. nicht ausgehärteten Zustand in seiner Schichtdicke durch Druck verändert wird. Es hat sich herausgestellt, daß dies zu hohen Ausschußraten führt und die Qualität der fertigen Substratscheiben wesentlich beeinträchtigt.

Aus der Druckschrift JP-A-58 042 435 ist eine Vorrichtung zum Fertigen von Datenaufzeichnungsträgern bekannt, bei der eine tranparente flache Platte auf eine Foto-Kunststoffschicht aufgelegt wird, wobei die Kunststoffschicht mit Licht bestrahlt wird.

Die Druckschrift EP-A-0 762 409 zeigt und beschreibt ein Verfahren und eine Vorrichtung zum Verkleben von Substraten, die nach dem Verkleben einer UV-Bestrahlung ausgesetzt wird, um das Klebemittel auszuhärten.

Beide Dokumente beschreiben eine Vorrichtung gemäß dem Oberbegriff des Anspruchs 1.

Der Erfindung liegt daher die Aufgabe zugrunde, eine Trocknungsvorrichtung der eingangs genannten Art zu schaffen, die mit einfachen technischen Mitteln und bei einfacher Handhabung der Vorrichtung geringere Ausschußraten und eine bessere Qualität der gefertigten Substratscheiben ermöglicht.

Die gestellte Aufgabe wird erfindungsgemäß dadurch gelöst, daß das Oberteil eine Glasplatten-Halterung aufweist, die sich beim Absenken des Oberteils zum Ablegen der Glasplatte auf die Substratscheibe unter diese absenkt. Das Auflegen der Glasplatte geschieht erfindungsgemäß also in der Trocknungsvorrichtung selbst, so daß der Zeitraum zwischen dem Auflegen der Glasplatte und dem Beginn des Trocknungsvorgangs sehr gering gehalten werden kann. Dies ist für die Ausschußrate und die Qualität der zu fertigenden Substratscheiben sehr wichtig, weil das zuvor mit hohem gerätetechnischen Aufwand gleichmäßig zwischen den zu verklebenden Substraten aufgebrachte Klebemittel seine Gleichmäßigkeit verliert und unterschiedliche Klebemittel-Schichtdicken zwischen den zu verklebenden Substraten entstehen, die zu Ausschuß und geringer Qualität der Substratscheiben führen. Für die gleichmäßige Aufbringung der Klebemittelschicht vor dem Trocknungsvorgang wird ein hoher Aufwand getrieben. Um die Vorteile der dadurch erreichten, gleichmäßigen Klebemittelschicht nicht zu verspielen, ist mit der erfindungsgemäßen Vorrichtung ein sehr kurzer Zeitraum zwischen dem Auflegen der Glasplatte und dem Beginn des Trocknungsvorgangs erreichbar.

Durch die Glasplatten-Halterung legt sich die Glasplatte ohne zusätzliche und ungleichmäßige Druckbelastung auf der Substratscheibe ab, wodurch der Druck der Glasscheibe über die gesamte Substratscheiben-Fläche hinweg sehr gleichmäßig ist, da nur das Eigengewicht der Glasplatte diesen Auflagedruck bewirkt. Auf diese Weise bleibt die zuvor gleichmäßig dicke Klebemittelschicht über die gesamte Substratscheiben-Fläche im wesentlichen erhalten.

Vorzugsweise weist die Glasplatten-Halterung Haltebleche auf, auf denen im nicht abgesenkten Zustand des Oberteils Randbereiche der Glasplatte aufliegen. Der apparative Aufwand zum Ablegen der Glasplatte auf die Substratscheibe ist daher denkbar einfach und insbesondere ist es durch einfache Mittel möglich, die Lage der Haltebleche und damit die Halterung und Absenkung der Glasplatte mit einfachen Mitteln einzustellen.

Die Haltebleche sind vorzugsweise als Reflektionsflächen ausgebildet, beispielsweise dadurch, daß sie hochglanzpoliert sind. Dadurch reflektieren sie die ulraviolette Strahlung insbesondere im Randbereich der zu trocknenden Substratschraube in geeigneter Weise, so daß die kritische Randtrocknung dadurch verbessert und beschleunigt wird. Da sich die Haltebleche nach Auflegen der Glasplatte auf die Substratscheibe unterhalb von ihr befinden, ist es durch den Einsatz dieser Halteblechbereiche unterhalb der Substratscheibe möglich das von oben einfallende ultraviolette Licht auch auf den unteren Randbereich der Substratscheibe zu lenken.

Gemäß einer weiteren sehr vorteilhaften Ausführungsform der Erfindung schließt die Glasplatte einen Bestrahlungsraum für die Substratscheibe nach oben ab. Die Glasplatte bildet also eine Abschlußwand für den Bestrahlungsraum, was insbesondere von Vorteil ist, wenn die Trocknungsvorrichtung gemäß einer weiteren Ausführungsform eine Gaseinlaß-Einrichtung zum Einleiten eines die Luft im Behandlungsraum verdrängenden Gases, beispielsweise zum Einleiten von Stickstoff aufweist. Durch das Verdrängen der im Behandlungsraum befindlichen Luft kann der darin enthaltene Sauerstoff nicht von der intensiven UV-Strahlung in Sauerstoffperoxid umgesetzt werden, das die UV-Strahlung stark absorbiert und den Trocknungsvorgang behindert oder verzögert. Mit dem erfindungsgemäßen anheb- und absenkbaren Oberteil der Trocknungsvorrichtung ist es möglich, die Glasplatte nicht nur auf die Substratscheibe abzulegen, sondern alternative auch in einem gewünschten Abstand von der Substratscheibe zu belassen, sodaß zwischen Glasscheibe und Glasplatte ebenfalls die darin befindliche Luft durch das eingelassene Gas verdrängt werden kann, und der Trocknungsvorgang über die gesamte Fläche der Substratscheibe hinweg verbessert oder beschleunigt wird. Insbesondere ist es mit der erfindungsgemäßen Vorrichtung auch möglich, schnell und ohne zusätzlichen Aufwand die Trocknungsweise der Substratscheiben zu verändern, nämlich entweder die Glasplatte vollständig auf die Substratscheibe abzulegen, oder die Glasplatte in einem gewählten Abstand über der Substratscheibe während des Trocknungsvorgangs zu halten.

Gemäß einer weiteren vorteilhaften Ausführungsform der Erfindung sind zwischen der Glasplatte und dem Substrat Abstandshalter vorgesehen. Der Abstandhalter kann dabei auf der Glasplatten-Halterung vorgesehen sein, sodaß dadurch die Glasplatte nicht auf die Substratscheibe abgelegt wird. Aufgrund des Abstandhalters, der eine gewünschte Dicke aufweisen kann, die dem gewünschten Abstand zwischen Glasplatte und Substratscheibe entspricht, ist es ebenfalls lediglich durch Auflegen des Abstandhalters auf die Glasplattenhalterung möglich, die erfindungsgemäße Vorrichtung von der Funktionsweise mit aufgelegter Glasplatte in die Funktionsweise mit Zwischenraum zwischen Glasplatte und Substratscheibe umzurüsten.

Gemäß einer besonders vorteilhaften Ausgestaltung der Erfindung ist eine Dreheinrichtung vorgesehen, die den Oberteil in seinem angehobenen Zustand in den und aus dem Bestrahlungsraum dreht oder schwenkt. Die Dreheinrichtung ist dabei vorzugsweise in einer Hubvorrichtung zum Anheben und Absenken des Oberteils integriert bzw. mit der Hubvorrichtung kombiniert, so daß die Antriebsvorrichtung für das Glasplattenhändling kompakt und einfach ausgebildet ist.

Vorzugsweise weist die Dreheinrichtung einen Runddrehtisch mit mehreren Oberteilen auf. Dadurch ist es möglich, die zuvor während des Trocknungsvorgangs aufgeheizten Glasplatten in eine Kühlstation zu bringen, die gemäß einer weiteren Ausgestaltung der Erfindung vorgesehen ist. Die Kühlstation kühlt also die nicht im Bestrahlungsraum der Trocknungsvorrichtung befindlichen Glasplatten, so daß diese dann wieder eine der Substratscheiben vergleichbare Temperatur aufweisen, wenn sie vor einem weiteren Trocknungsvorgang auf eine Substratscheiben aufgelegt werden. Unterscheiden sich die Temperaturen zwischen der aufgelegten Glasplatte und der Substratscheibe wesentlich, so führt dies wiederum zu einer Beeinträchtigung der Produktionsqualität von Substratscheiben und zu erhöhtem Ausschuß.

Eine vorteilhafte Ausgestaltung der Erfindung besteht darin, daß der Runddrehtisch vier Oberteile aufweist, von denen sich jeweils zwei Oberteile im Bestrahlungsraum der Trocknungsvorrichtung und jeweils zwei Oberteile in der Kühlstation befinden. Bei dieser Ausführungsform wird also der Runddrehtisch jeweils um 180° gedreht und danach werden die beiden, sich über einem Unterteil befindlichen Oberteile gleichzeitig auf die Substratscheiben abgesenkt. Der Trocknungsvorgang erfolgt dann für zwei Substratscheiben gleichzeitig in der Trocknungsvorrichtung.

Als Kühlmittel kann jedes geeignete Fluid eingesetzt werden. Vorteilhaft ist jedoch in diesem Zusammenhang ionisierte Luft, die in die Kühlstation eingeblasen wird und an den zu trocknenden Glasplatten vorbeistreicht.

Eine weitere vorteilhafte Ausgestaltung der Erfindung besteht darin, das Unterteil der Trocknungsvorrichtung als Auflageteller für die Substratscheibe auszubilden, der drehbar ist. Auf diese Weise werden die auf dem Teller liegenden Substratscheiben im Bestrahlungsraum gleichmäßigen Bestrahlungsverhältnissen ausgesetzt und es erfolgt eine gleichmäßige und schnelle Trocknung bzw. Aushärtung des Klebemittels, wodurch die Produktionsqualität wiederum verbessert wird.

Die Erfindung wird nachstehend anhand eines bevorzugten Ausführungsbeispiels unter Bezugnahme auf die Figuren erläutert. Es zeigen:
- Fig. 1: eine schematische Darstellung einer erfindungsgemäßen Trocknungsvorrichtung in Aufsicht,
- Fig. 2: einen Querschnitt entlang der in Fig. 1 eingezeichneten Schnittlinie II-II bei angehobenem Öberteil,
- Fig. 3: eine vergrößerte Querschnittsdarstellung des Ober- und Unterteils mit abgesenktem Oberteil, und
- Fig. 4: einen Teilausschnitt der dargestellten Ausführungsform in Aufsicht zur Erläuterung der Einrichtungen zum Drehen von Auflagetellern in der Bestrahlungsstation 8.

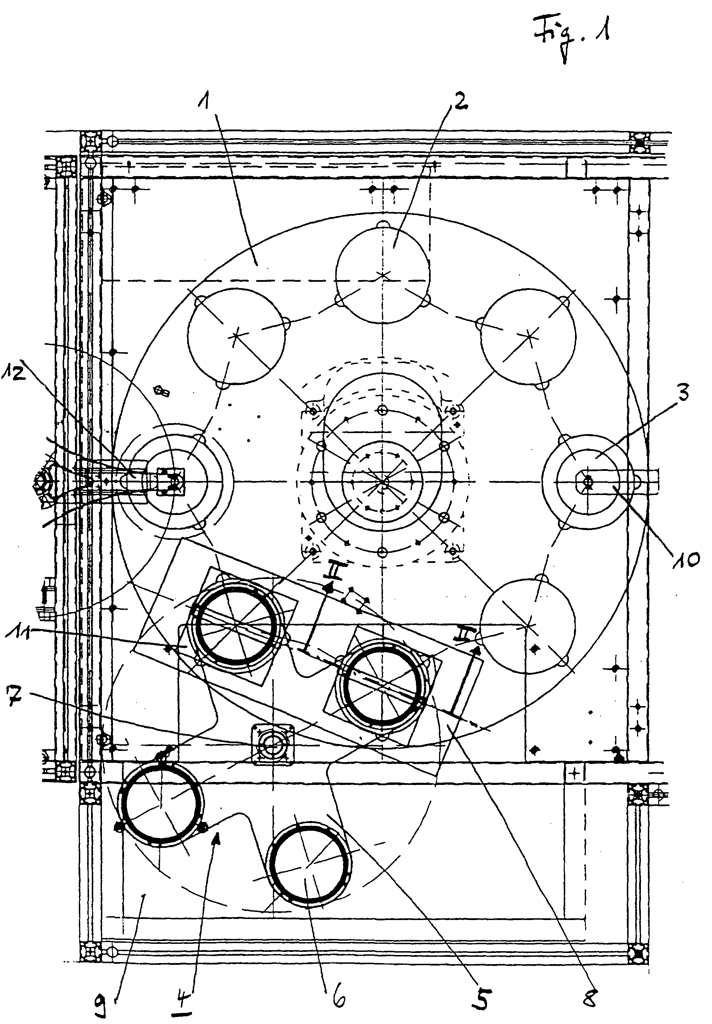

Die dargestellte Ausführungsform einer Trocknungsvorrichtung weist gemäß Fig. 1 einen Rundschalttisch 1 mit acht Auflagepositionen 2 für zu trocknende Substratscheiben 3 auf. Ein Glashandler 4 weist vier Arme 5 auf, an deren Enden jeweils ein Oberteil 6 der Trocknungsvorrichtung angebracht ist. Der Glashandler 4 ist in der Mitte von einer Säule 7 gehalten, die dreh- bzw. verschwenkbar ist und angehoben bzw. abgesenkt werden kann. Eine Bestrahlungsstation 8 befindet sich in einem Bereich von zwei Auflagepositionen 2, und im Bereich der nicht in der Bestrahlungsstation 8 befindlichen Oberteilen 6 befindet sich eine Kühlstation 9.

Die zu trocknenden Substratscheiben 3, die zuvor in einem vorausgegangenen Fertigungsschritt aus zwei Substraten zusammengeklebt wurden, werden mittels eines Substratscheibenhandlers 10 auf Auflagepositionen 2 des Rundschalttischs 1 gelegt. Um Wiederholungen hinsichtlich der dem Trocknungsvorgang vorausgegangenen oder nachfolgenden Fertigungsschritte zu vermeiden, wird auf die nicht vorveröffentlichte DE-OS-197 18 471 mit Anmeldetag 30. April 1997 verwiesen, die auf die Inhaberin des vorliegenden Schutzrechts zurückgeht.

Der Rundschalttisch 1 dreht sich im Uhrzeigersinn schrittweise um jeweils 45°, so daß jeweils zwei Substratscheiben 3 in die Bestrahlungsstation 8 gelangen. Danach wird der Glashandler 4 um 180° gedreht, so daß jeweils eine Glasscheibe 11 auf die in der Bestrahlungsstation 8 befindlichen Substratscheiben 3 aufgelegt werden können. Die bei dieser Drehbewegung in die Kühlstation 9 gelangenden beiden anderen Glasscheiben 11 werden dort beispielsweise mit ionisierter Luft gekühlt.

Die getrockneten Substratscheiben 3 werden nach Austritt aus der Bestrahlungsstation 8 von einem weiteren Handler 12 ergriffen und aus der Trocknungs-Vorrichtung entfernt.

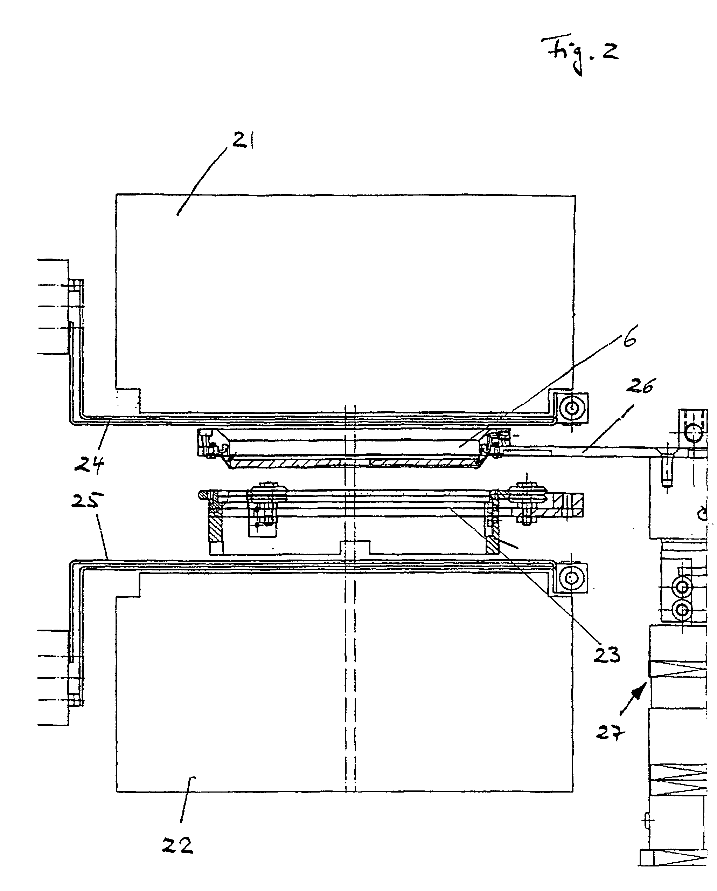

Wie insbesondere aus Fig. 2 zu ersehen ist, weist die Bestrahlungsstation 8 obere UV-Lampen 21 und untere UV-Lampen 22 auf, zwischen denen der Oberteil 6 und ein Unterteil 23 angeordnet sind. Ein Verschluß 24 unter der oberen UV-Lampe 21 und ein Verschluß 25 über der unteren UV-Lampe 22 ermöglicht eine gesteuerte, kontrollierte UV-Bestrahlung der auf dem Unterteil 23 liegenden Substratscheibe 3.

Während der Unterteil 23 stationär ist, ist das Oberteil 6 über einen Arm 26 mit einer kombinierten Dreh- und Hubvorrichtung 27 verbunden, die in Fig. 2 als Teilschnitt schematisch dargestellt ist, und mit der das Oberteil 6 angehoben und abgesenkt, sowie senkrecht zur Zeichnungsebene aus dem Bestrahlungsraum 28 gedreht bzw. geschwenkt wird.

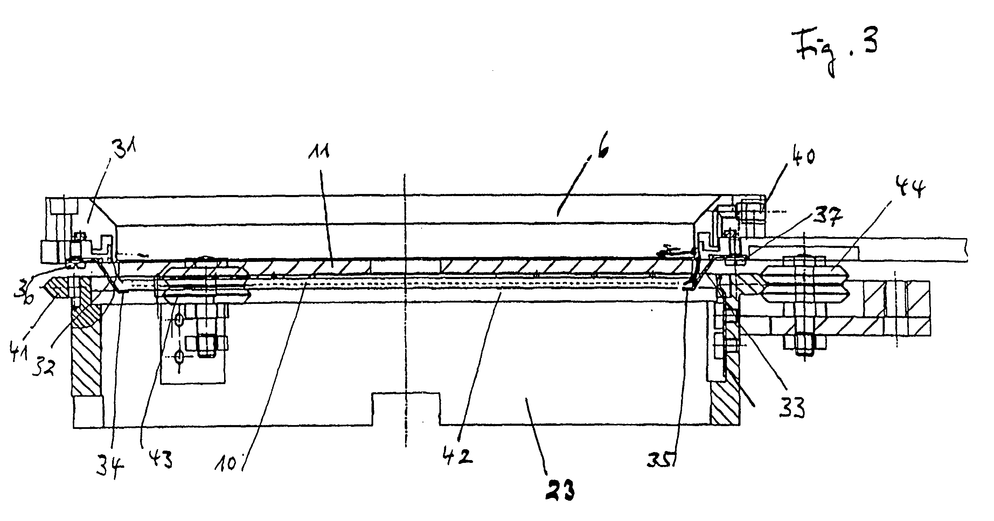

Fig. 3 zeigt einen vergrößerten Ausschnitt aus der in Fig. 2 dargestellten Vorrichtung, und zwar das Oberteil 6 und das Unterteil 23 in einem Zustand, in dem das Oberteil 6 auf das Unterteil 23 abgesenkt ist.

Das Oberteil 6 weist einen rechteckigen Rahmen 31 auf. Auf der Unterseite des Oberteils 6 befindet sich mindestens an den seitlichen Rahmenteilen 31 jeweils eine Glasplatten-Halterung 32, 33, die bei dem dargestellten Ausführungsbeispiel als gebogenes Blechteil mit jeweils einer Auflagekante 34, 35 für die Auflage der Glasplatte 11 ausgebildet ist. Die Glasplatten-Halterung 32, 33 ist mittels Schrauben 36, 37 auf der Unterseite des Oberteils 6 befestigt.

Während die Glasplatte 11 bei abgehobenem Oberteil 6 (vergleiche Fig. 2) in ihren Randbereichen auf der Auflagekante 34 bzw. 35 der Glasplatten-Halterung 32, 33 aufliegt, kommt sie bei Absenken des Oberteils 6 von den Auflagekanten 34, 35 frei, weil diese sich so weit nach unten absenken, daß die Glasplatte 11 beim Absenken des Oberteils 6 auf die in Fig. 3 gestrichelt dargestellte Substratscheibe 3 zur Auflage kommt. Die Glasplatte 11 wird also sanft auf die Substratscheibe 3 aufgelegt und drückt gleichmäßig mit ihrem Eigengewicht darauf, so daß sie die Substratscheibe 3 während des unmittelbar nach dem Auflegen der Glasplatte 11 beginnenden Trocknungsvorgangs die Substratscheibe 3 flach und eben hält.

Wie am besten aus Fig. 3 zu ersehen ist, befindet sich am Rahmen 31 des Oberteils 6 eine Gaseinlaßeinrichtung 40, über die beispielsweise Stickstoff in den Bestrahlungsraum eingelassen wird. Bei dem in Fig. 3 dargestellten Ausführungsbeispiel liegt die Glasplatte 11 auf der Substratscheibe 3 auf. Soll dagegen zwischen Glasplatte und Substratscheibe ein Zwischenraum vorhanden sein, um auch dort die Luft und damit den bei der Trocknungsvorrichtung nachteiligen Sauerstoff in der Luft durch Stickstoff zu verdrängen, wird das Oberteil 5 weniger weit abgesenkt, nämlich so weit, daß ein gewünschter Zwischenraum zwischen Glasplatte 11 und Substratscheibe 3 aufrechterhalten bleibt. In diesem Falle bleibt die Glasplatte 11 auf der Auflagekante 34 bzw. 34 der Glasplatten-Halterung 32 bzw. 33 liegen und wird auch während des Trocknungsvorgangs in dieser Stellung gehalten.

Bei der dargestellten Ausführungsform weist das Unterteil 23 einen Auflageteller 41 mit einer Auflageglasplatte 42 auf, auf der die Substratscheibe 3 liegt. Der Auflageteller 41 ist durch Rollen 43, 44, 45 drehbar und gleichzeitig in ihrer Lage geführt. Bei dem dargestellten Ausführungsbeispiel sind drei Rollen 43, 44, 45 um jeweils 120° zueinander winkelmäßig versetzt vorgesehen, wobei in Fig. 1 jedoch nur zwei Rollen 43, 44 dargestellt sind.

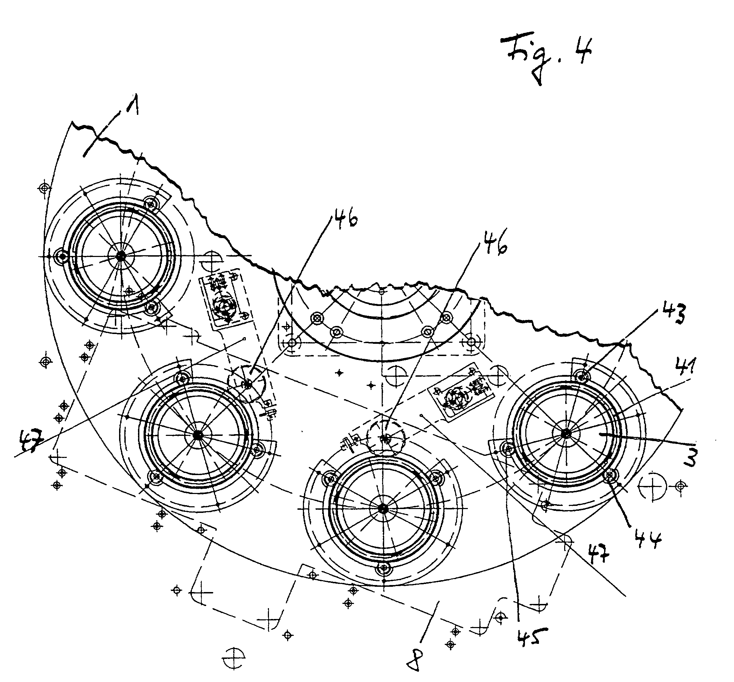

Fig. 4 zeigt einen Ausschnitt des Rundschalttisches 1 mit Auflagetellern 41, die an ihren Rändern jeweils mit den um 120° zueinander versetzten Rollen 43, 44, 45 geführt und gelagert sind. Wenn bei einer Drehung des Rundschalttisches 1 im Uhrzeigersinn der Auflageteller 41 mit darauf befindlichen Substratscheibe 3 in die Bestrahlungsstation 8 gelangt, kommt der Rand des Auflagetellers 41 im Kontakt mit einer Antriebsrolle 46, die am Ende eines Tragarms 47 gelagert ist und angetrieben wird. Während des Trocknungsvorgangs wird der Auflageteller 41 und damit auch die Substratscheibe 3, gegebenenfalls zusammen mit der auf der Substratscheibe 3 liegenden Glasplatte 11, gedreht, so daß sich eine gleichmäßige und schnelle Trocknung und Aushärtung der Substratscheibe bzw. des Klebemittels ergibt. Aus Gründen der Übersichtlichkeit wurde der Glashandler 4 bei der in Fig. 4 dargestellten Ansicht nicht wiedergegeben.

Die Erfindung wurde zuvor anhand eines bevorzugten Ausführungsbeispiels beschrieben. Dem Fachmann sind jedoch Ausgestaltungen und Abwandlungen möglich, ohne daß dadurch der Erfindungsgedanke verlassen wird. Beispielsweise ist zum Transport der zu trocknenden Substratscheiben unter die Bestrahlungssstation 8 statt eines Rundschalttisches 1 auch eine lineare Transporteinrichtung einsehbar.

## Patentansprüche

1. Vorrichtung zum Trocknen von Substratscheiben (3) durch Bestrahlen mit ultraviolettem Licht, wobei während des Bestrahlungsvorgangs eine Glasplatte (11) auf der Substratscheibe (3) aufliegt, wobei ein anheb- und absenkbares Oberteil (6) die Glasplatte (11) auf die auf einem unterteil (23) liegende Substratscheibe (3) absenkt, **dadurch gekennzeichnet, daß** das Oberteil (6) eine Glasplatten-Halterung (32, 33) aufweist, die sich beim Absenken des Oberteils (6) zum Ablegen der Glasplatte (11) auf die Substratscheibe unter diese absenkt.

2. Vorrichtung nach Anspruch 1, **dadurch gekennzeichnet, daß** die Glasplatten-Halterung (32, 33) Haltebleche (34, 35) aufweist, auf denen im nicht abgesenkten Zustand des Oberteils (6) Randbereiche der Glasplatte (11) aufliegen.

3. Vorrichtung nach Anspruch 1 oder 2, **dadurch gekennzeichnet, daß** wenigstens Teilbereiche der Glasplatten-Halterung (32, 33) als Reflektions-Flächen für die ultraviolette Strahlung ausgebildet sind.

4. Vorrichtung nach einem der vorhergehenden Ansprüche, **dadurch gekennzeichnet, daß** die Glasplatte (11) einen Bestrahlungsraum für die Substratscheiben (3) nach oben abschließt.

5. Vorrichtung nach Anspruch 4, **gekennzeichnet durch** eine Gaseinlaß-Einrichtung (40) zum Einleiten eines die Luft im Bestrahlungsraum verdrängenden Gases.

6. Vorrichtung nach Anspruch 5, **dadurch gekennzeichnet, daß** das Gas Stickstoff ist.

7. Vorrichtung nach einem der vorhergehenden Ansprüche, **dadurch gekennzeichnet, daß** zwischen der Glasplatte (11) und der Substratscheibe (3) Abstandshalter vorgesehen sind.

8. Vorrichtung nach Anspruch 7, **dadurch gekennzeichnet, daß** die Abstandshalter einstückig mit der Glasplatte (11) ausgebildet sind.

9. Vorrichtung nach einem der vorhergehenden Ansprüche, **gekennzeichnet durch** einen Glashandler (4) zum Handeln der Glasplatten (11).

10. Vorrichtung nach Anspruch 9, **dadurch gekennzeichnet, daß** der Glashandler (5) eine Dreheinrichtung (27) aufweist.

11. Vorrichtung nach Anspruch 10, **dadurch gekennzeichnet, daß** die Dreheinrichtung (27) mit einer Hubeinrichtung zum Anheben und Absenken des Oberteils (6) kombiniert ist.

12. Vorrichtung nach Anspruch 10 oder 11, **dadurch gekennzeichnet, daß** die Dreheinrichtung (27) mehrere Arme (5) für jeweils ein Oberteil (6) aufweist.

13. Vorrichtung nach einem der Ansprüche 10 bis 12, **gekennzeichnet durch** eine Kühlstation (9) zum Kühlen der während des Trocknungsvorgangs aufgeheizten Glasplatten (11).

14. Vorrichtung nach einem der Ansprüche 10 bis 13, **dadurch gekennzeichnet, daß** die Dreheinrichtung (27) vier Oberteile (6) aufweist, von denen sich jeweils zwei Oberteile in der Bestrahlungsstation (8) und jeweils zwei Oberteile in der Kühlstation (9) befinden.

15. Vorrichtung nach Anspruch 13 oder 14, **dadurch gekennzeichnet, daß** das Kühlmittel ionisierte Luft ist.

16. Vorrichtung nach einem der vorhergehenden Ansprüche, **dadurch gekennzeichnet, daß** das Unterteil (23) einen Auflageteller (41) für die Substratscheibe (3) aufweist.

17. Vorrichtung nach Anspruch 16, **dadurch gekennzeichnet, daß** der Auflageteller (41) drehbar ist.

## Claims

1. Device for drying substrate disks (3) by irradiation with ultraviolet light, wherein during the irradiation process a glass plate (11) rests on the substrate disk (3), wherein a liftable and lowerable upper part (6) lowers the glass plate (11) onto the substrate disk (3) resting on a lower part (23), **characterised in that** the upper part (6) has a glass plate holding device (32, 33), which on lowering of the upper part (6) for placement of the glass plate (11) on the substrate disk drops below this.

2. Device according to claim 1, **characterised in that** the glass plate holding device (32, 33) comprises securing brackets (34, 35) on which, in the not lowered state of the upper part (6), edge regions of the glass plate (11) rest.

3. Device according to claim 1 or 2, **characterised in that** at least portions of the glass plate holding device (32, 33) are formed as reflective surfaces for the ultraviolet radiation.

4. Device according to one of the preceding claims, **characterised in that** the glass plate (11) delimits an irradiation chamber for the substrate disk (3) in the upper direction.

5. Device according to claim 4, **characterised by** a gas inlet device (40) for introducing a gas displacing the air in the irradiation chamber.

6. Device according to claim 5, **characterised in that** the gas is nitrogen.

7. Device according to one of the preceding claims, **characterised in that** spacers are provided between the glass plate (11) and the substrate disk (3).

8. Device according to claim 7, **characterised in that** the spacers are formed integrally with the glass plate (11).

9. Device according to one of the preceding claims, **characterised by** a rotation device (27) which rotates the upper part (6) in its lifted position in and out of the irradiation chamber.

10. Device according to claim 9, **characterised in that** the glass handling device comprises a rotation device.

11. Device according to claim 10, **characterised in that** the rotation device (27) is combined with a lifting device for lifting and lowering the upper part (6).

12. Device according to claim 10 or 11, **characterised in that** the rotation device (27) comprises several arms (5) each for a respective upper part (6).

13. Device according to one of claims 10 to 12, **characterised by** a cooling station (9) for cooling the glass plates (11) heated during the drying process.

14. Device according to one of claims 10 to 13, **characterised in that** the rotation device (27) has four upper parts (6), of which a respective two upper parts are positioned in the irradiation station (8) and a respective two upper parts are positioned in the cooling station (9).

15. Device according to claim 13 or 14, **characterised in that** the cooling medium is ionised air.

16. Device according to one of the preceding claims, **characterised in that** the lower part (23) has a placement plate (41) for the substrate disk (3).

17. Device according to claim 16, **characterised in that** the placement plate (41) is rotatable.

## Revendications

1. Dispositif pour le séchage de disques de substrat (3) par irradiation avec une lumière ultraviolette, où pendant l'opération d'irradiation, une plaque de verre (11) repose sur le disque de substrat (3), où une partie supérieure (6) pouvant être relevée et abaissé abaisse la plaque de verre (11) sur le disque de substrat (3) reposant sur une partie inférieure (23), **caractérisé en ce que** la partie supérieure (6) présente un support de plaque de verre (32, 33) qui, lors de l'abaissement de la partie supérieure (6) pour déposer la plaque de verre (11) sur le disque de substrat, descend sous celui-ci.

2. Dispositif selon la revendication 1, **caractérisé en ce que** le support de plaque de verre (32, 33) présente des tôles de retenue (34, 35) sur lesquelles, à l'état non abaissé de la partie supérieure (6), reposent des zones de bord de la plaque de verre (11).

3. Dispositif selon la revendication 1 ou 2, **caractérisé en ce qu'**au moins des zones partielles du support de plaque de verre (32, 33) sont réalisées comme faces de réflexion pour le rayonnement ultraviolet.

4. Dispositif selon l'une des revendications précédentes, **caractérisé en ce que** la plaque de verre (11) ferme vers le haut une enceinte d'irradiation pour les disques de substrat (3).

5. Dispositif selon la revendication 4, **caractérisé par** une installation d'entrée de gaz (40) pour introduire un gaz refoulant l'air dans l'enceinte d'irradiation.

6. Dispositif selon la revendication 5, **caractérisé en ce que** le gaz est de l'azote.

7. Dispositif selon l'une des revendications précédentes, **caractérisé en ce que** sont prévues entre la plaque de verre (11) et le disque de substrat (3) des pièces d'écartement.

8. Dispositif selon la revendication 7, **caractérisé en ce que** les pièces d'écartement sont réalisées en une pièce avec la plaque de verre (11).

9. Dispositif selon l'une des revendications précédentes, **caractérisé par** un manipulateur de verre (4) pour manipuler les plaques de verre (11).

10. Dispositif selon la revendication 9, **caractérisé en ce que** le manipulateur de verre (5) présente une installation tournante (27).

11. Dispositif selon la revendication 10, **caractérisé en ce que** l'installation tournante (27) est combinée avec une installation de levage pour relever et abaisser la partie supérieure (6).

12. Dispositif selon la revendication 10 ou 11, **caractérisé en ce que** l'installation tournante (27) présente plusieurs bras (5) pour respectivement une partie supérieure (6) .

13. Dispositif selon l'une des revendications 10 à 12, **caractérisé par** un poste de refroidissement (9) pour refroidir les plaques de verre (11) chauffées pendant l'opération de séchage.

14. Dispositif selon l'une des revendications 10 à 13, **caractérisé en ce que** l'installation tournante (27) présente quatre parties supérieures (6) dont respectivement deux parties supérieures se trouvent dans le poste d'irradiation (8) et respectivement deux parties supérieures dans le poste de refroidissement (9) .

15. Dispositif selon la revendication 13 ou 14, **caractérisé en ce que** l'agent de refroidissement est de l'air ionisé.

16. Dispositif selon l'une des revendications précédentes, **caractérisé en ce que** la partie inférieure (23) présente un plateau d'appui (41) pour le disque de substrat (3) .

17. Dispositif selon la revendication 16, **caractérisé en ce que** le plateau d'appui (41) peut être entraîné en rotation.
